# EUROPEAN PATENT APPLICATION

(11) **EP 0 833 524 A2**
(43) Date of publication of application: **01.04.1998**
(21) Application number: 97116798.6
(22) Date of filing: 26.09.1997
(51) Int. Cl.: H04N 11/16

(54) **Method and device for improving the picture reproduction quality in a wide-screen television receiver**

(30) Priority: 27.09.1996 DE 19640012
(71) Applicant: SONY DEUTSCHLAND GmbH, 50829 Köln (DE)
(72) Inventor: Wagner, Peter, 71334 Waiblingen (DE); Dilly, Altfried, 70191 Stuttgart (DE); Lubbers, Jos, 70190 Stuttgart (DE)
(74) Representative: Müller, Frithjof E., Dipl.-Ing.

(57) **Abstract**

The picture reproduction quality of a colour picture reproduction set for wide-screen display can be improved if, according to the invention, reference signals delivered in set time slots of the colour picture video signal are acquired, compared, intermediately stored and used by means of a processing procedure for setting specific values, in particular the luminance signal level and the level of the digitized colour video signals to be fed to a digital PALplus decoder. In this case, when driving the PALplus decoder through a VCR, line or picture synchronization errors can be avoided if, on the basis of a specific noise signal level related to a helper setup level, a gain adjustment signal for the helper contribution to the wide-screen decoder process is reduced or automatically suspended.

## Description

The invention relates to a method and a device for improving the picture reproduction quality in wide-screen television receivers, in which luminance and chrominance signals received via a decoder with demodulator for a helper signal are digitized and subsequently decoded in a suitable decoder.

In particular, the invention relates to a method and to a device for improving the picture reproduction quality in PALplus television receivers. However, the teaching of the invention is also usable for other wide-screen reproduction methods, for example NTSC-EDTV-II (EDTV = Extended Definition Television) which is used in Japan. Although reference is made below to PALplus, other wide-screen reproduction methods are thus also included.

A PALplus decoding method and a PALplus decoder have already been specified in the PALplus system description by the PALplus Consortium of December 1995, which was published by ZDF, Büro PALplus, ZDF Straße 1, Postfach 4040, 55100 Mainz.

In specific operating states or operating modes of television receivers of this type, losses of quality in the picture reproduction and/or synchronization errors are observed, for example in the case of picture reproduction by a VCR machine.

As an approach for eliminating such losses of quality or errors, the invention uses the fact that, in currently known wide-screen decoders in television receivers designed for wide-screen signalling, specific reference signals, which are transmitted together with the wide-screen coded signals, can be utilized to improve the picture reproduction quality considerably.

The method according to the invention for improving the picture reproduction quality for a wide-screen television receiver is characterized in that at least one of the reference signals present in one or more set lines of the transmitted reception signal encoded for wide-screen reproduction is measured, the measured value is stored and used to adjust or re-adjust at least one signal determining the picture reproduction.

Furthermore, according to the invention, the measured value used for level adjustment of the luminance signal before its decoding is, related to the black level reference, the difference between a white and a black level in the relevant reference signal with regard to the input of a decoding process.

In order not to produce visible effects, the exact signal levels of the helper signals must be maintained for the PALplus processing. However, the signal levels deviate from their intended values owing to noise and environmental conditions during the transmission and when cheap components are used in the processing system.

According to the invention, this problem is remedied in that, in relation to delivery to the wide-screen processor, the noise signal level is measured on the black level reference transmitted in a specific line, for example line 23. At the same time, the helper setup level transmitted in the relevant line, i.e. for example line 23, and the demodulated helper reference value likewise transmitted there are measured. These measured values are used to determine an internal helper characteristic. The gain level for the helper signal is calculated on the basis of the helper characteristic. A correction factor of between 0 and 1 is determined on the basis of the measured noise signal level, preferably in relation to a comparison curve which, for example, is stored in a look-up table. The previously calculated gain level for the helper signal is combined with the correction factor, which gives a helper control value of between 0 and a maximum value (0 ≤ g_{H} ≤ 2). The helper signal is shifted before or after multiplication by the helper control value, on the basis of the measured helper setup level and the intended value at this level. In other words, in the case of picture reconstruction by decoding, the contribution of a helper signal is reduced or suspended if the measured noise level exceeds a predeterminable threshold value relative to a noise signal reference. Otherwise, the helper signal is optimally set.

In specific operating modes, in particular if the signal is delivered via a colour video recorder (VCR), depending on the helper level, phase instabilities in the horizontal sync pulses and therefore line errors may result. It has been established that these line errors are primarily caused by comb filtering which is customarily provided in, or in the case of driving by, a VCR, which then leads to spurious addition of the helper signals in the picture reconstruction.

According to the invention, this problem is resolved in that, if the helper characteristic exceeds a predeterminable threshold value, the gain level for the helper signal is set to zero. Furthermore, ColourPlus processing which is an option in PALplus reproduction is in this case turned off.

The measures presented above for improving the picture reproduction quality in a wide-screen receiver may be implemented individually or in combination at the hardware level and in the operating program. For example, according to the current PALplus system description, the measured value for the level adjustment of the luminance signal is obtained on the basis of reference signals transmitted in line 623, in particular the white reference signal and the black reference signal, and is stored before being converted via an interface into a level adjustment signal for the luminance signal applied to the power decoder, in a suitable time interval determined by the program, using a µ-controller and in accordance with a special bus protocol.

Similar considerations hold for the helper reference signal which determines the helper level optimization for the wide-screen decoder and is derived from the helper reference burst transmitted, for example, in picture line 23, the differential level between the demodulated helper reference burst and the helper setup value transmitted in the same line being used in this case. Furthermore, the noise signal superimposed on the black signal level and measured in a specific line, for example line 23, is used to provide a criterion for reducing the gain of the helper signal or for suspending the helper signal in the picture reconstruction by wide-screen decoding.

In the case of a signal delivered via a colour video recorder (VCR) the gain level for the helper signal is set to zero, with the effect that the helper signal is suppressed, if the helper characteristic rises above a predeterminable threshold line. In this case, ColourPlus processing, which is an option in PALplus reproduction, is additionally turned off.

The invention and advantageous details will be explained in more detail below in an illustrative embodiment with reference to the drawing, in which:
- Fig. 1: shows the block diagram of a wide-screen decoder having features according to the invention;
- Fig. 2: shows the time profile of individual characteristic reference signals transmitted in a specific line, for example line 23, for a wide-screen colour video signal;
- Fig. 3: shows the time profile of further reference signals transmitted in another specific line, for example line 623, in particular for the white and black levels; and
- Fig. 4: shows the qualitative representation of a comparison curve for reducing or turning off the contribution of the helper signal in the wide-screen decoding on the basis of a noise signal proportion measured on the black value reference.

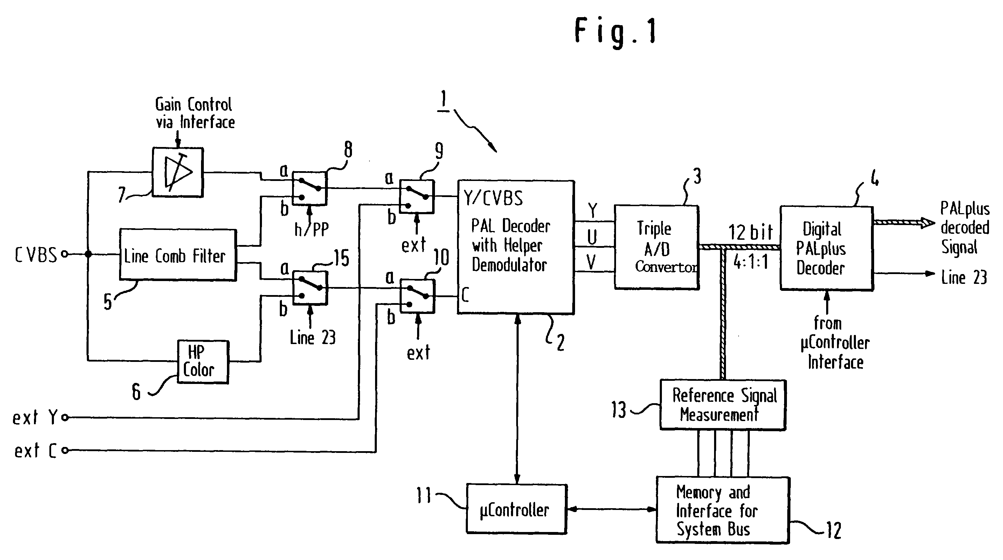

The schematic block diagram in Fig. 1 illustrates a wide-screen decoder which, customarily and by way of example, comprises a PAL decoder having a helper demodulator 2, a triple A/D convertor 3 whose input receives the luminance signal Y as well as the two chrominance signals U, V which are delivered by the PAL decoder 2, and a digital wide-screen decoder 4 whose input is fed with a 12-bit coded colour video signal (the weighting ratio of the luminance signal to the two colour signals is 4:1:1) and whose output delivers the wide-screen decoded, i.e. reconstructed, picture signal. Depending on the position of two switches 8, 9 or two further switches 10, 11, the input of the PAL decoder 2 with helper demodulator receives the luminance signal or CVB signal via an amplifier 7 with controllable gain, as well as the chrominance signal via a line comb filter 5. If the wide-screen decoder is fed by another external source, for example a colour video recorder, then both switches 9, 10 are in the lower switching position b (cf. Fig. 1). The function of the further switches 8, 15 preceding them will be explained further below.

According to the invention, the wide-screen decoder 1 has a reference-signal measuring circuit 13 which, under the control of the system processor (not shown) acquires reference signals in specific time slots assigned to specific individual lines, in the manner mentioned above and explained in further detail below, and puts them in a memory 12 whose module also contains the interface for a system bus, for example an I²C bus. Under the control of the system processor, in particular during the vertical blank gaps, adjustment values for the gain of the amplifier 7 for the luminance signal Y, on the one hand, and for the level of the digital signals at the digital wide-screen decoder 4, on the other hand, are calculated by a µ-controller 11 which, as a rule, but not necessarily, will be the same as the system computer, while taking into account the measured reference signals.

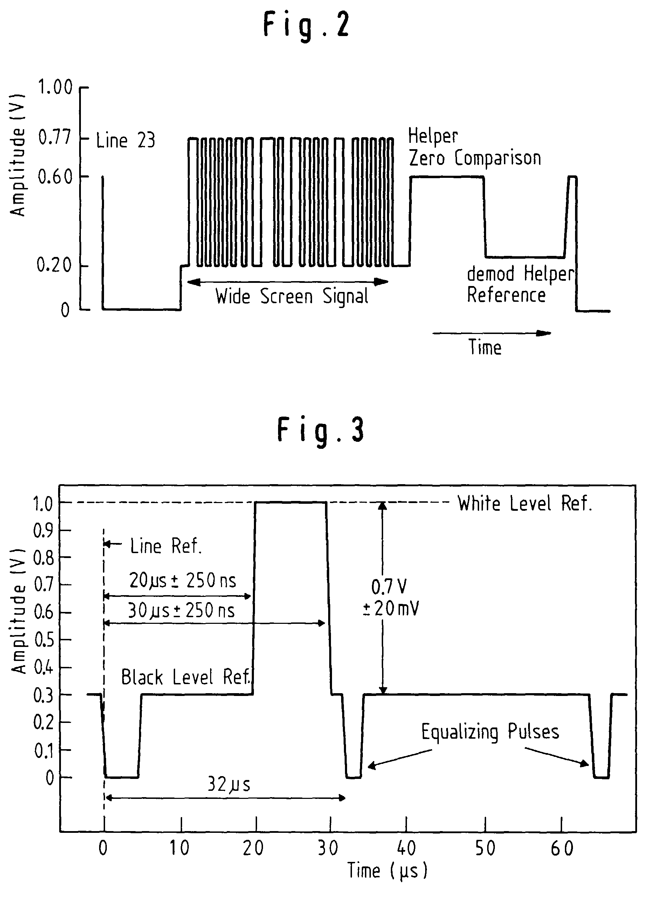

The reference signals taken into account for the gain adjustment of the luminance signal or of the CVB signal (Colour Video Baseband Signal) for the PAL decoder 2, and the reference signals used for adjusting the digital wide-screen decoder 4 will firstly be explained below with reference to Figures 2 and 3. In the example which is presented, the reference signals in Figures 2 and 3 correspond to the normative reference signals for the wide-screen system, which are transmitted in line 23 (Fig. 2), on the one hand, or in line 623 (Fig. 3) on the other hand.

The first adjustment value, namely for the gain of the amplifier 7 which amplifies the luminance signal, is obtained from the ratio of the difference between the white level reference and the black level reference as well as the intended luminance value. By virtue of such a selection, the full control range of the triple A/D convertor 3 is employed. A deviation of the measured black level reference from the intended value is corrected in the digital PALplus decoder 4. In this way, the level of the luminance signal is adjusted before its decoding, in relation to the black level reference, by the difference between the white and black level references.

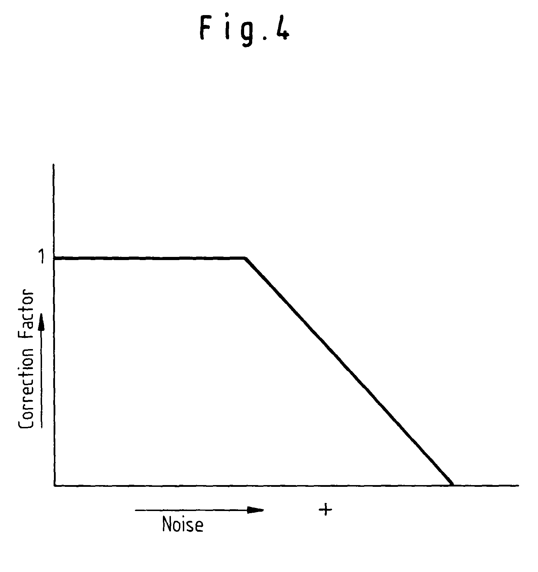

Furthermore, according to the invention, the adjustment of the digital wide-screen decoder 4 employs the difference between the demodulated helper reference and the helper setup level. This difference is converted to a ratio with an intended value, which gives the intended gain level for the helper signal. A correction value of between zero and one is given by the measured noise signal level and a characteristic stored, for example, in a look-up table (cf. Fig. 4). This correction factor is multiplied by the previously calculated gain level for the helper signal, which gives a helper control value of between zero and two, the maximum value of two being merely an appropriately chosen value. Using the helper control value, the level value of the helper signal at the input of the PALplus decoder 4 is increased or decreased. Before multiplication by the helper control value, the helper signal is shifted through an addition operation by the difference between the helper setup level and the intended value of this level.

Commercially available analog colour video recorders (VCRs) exhibit strong fluctuations in the horizontal sync pulse. Furthermore, the colour information of two successive lines is always corrupted in these sets. This distorts the helper signal.

In this case, the helper reference value is about halved. If such a reduced helper reference value is measured, then the helper signal is suppressed, in order to avoid visible artefacts, by setting the gain level for the helper signal to zero. Furthermore, the ColourPlus processing is distorted by the strongly fluctuating horizontal sync pulse; for this reason it is turned off in this case as well.

In order for the comb filter 5 present in the signal path not to distort the measurement results, it is bypassed at the measurement instant, that is to say during line 23, the colour signal being in this case set via a high-pass filter 6.

The end of a tape replay can then be established by the resetting of the helper reference value to close to its normal level.

By virtue of the measures according to the invention for acquiring and utilizing specific reference signals, which may be implemented individually or in combination, a considerable increase in the picture quality is achieved for specific reception states and/or operating merits of a wide-screen picture reproduction set.

Although the description of the teaching of the invention relates to a PALplus reproduction method, it will be clear to the person skilled in the art that the subject-matter of the invention is also usable for other wide-screen reproduction methods in which similar reference signals are transmitted, for example NTSC-EDTV-II in Japan.

## Claims

1. Method for improving the picture reproduction quality in a wide-screen television receiver, characterized in that at least one of the reference signals present in one or more set lines of the transmitted reception signal is measured, the measured value is stored and used to adjust or re-adjust at least one signal determining the picture reproduction.

2. Method according to Claim 1, characterized in that the measured value used for a level adjustment (7) of the luminance signal (Y) before its decoding (2, 3, 4) is the difference between a white and a black level reference in the relevant line-related reference signal, related to the black level reference and its delivery to the input of a decoder process (4).

3. Method according to Claim 1, characterized in that the measured value used for level adjustment of the demodulated helper signal to be fed to the decoding is the differential level between a demodulated helper reference burst and a helper setup level, related to the helper setup level.

4. Method according to Claim 1, characterized in that, in the case of picture reconstruction by decoding, the contribution of a helper signal is suspended if a measured noise level exceeds a predeterminable threshold value relative to a noise signal reference.

5. Method according to Claim 4, characterized in that the threshold value for suspension of the helper signal in the case of wide-screen decoding is determined by a predeterminable or pre-stored noise signal reference curve.

6. Method according to Claim 4 or 5, characterized in that the noise signal reference used is a noise signal superimposed on the black level reference signal.

7. Method according to Claim 1, characterized in that, in the event of a demodulated helper reference signal above a specific threshold value, the helper signal is set to zero.

8. Method according to Claim 1, characterized in that the method steps of Claims 2 to 7 are used individually or in an arbitrary combination.

9. Method according to one of Claims 1 to 8, characterized by use in a PALplus television receiver.

10. Device for improving the picture reproduction quality in a wide-screen television receiver in which luminance and chrominance signals (Y, U, V) received via a decoder with demodulator (2) are digitized (3) and subsequently decoded in a further decoder (4), characterized by
- a reference-signal measuring device (13) which acqui res a reference signal transmitted in one or more set lines of the coded CVB signal before the further decoding,
- a memory device (12) which intermediately stores the measured reference signals for subsequent signal processing, and by
- a signal processing device (12) which, from the reference signal or signals, delivers adjustment signals for the components of the colour video signal decoding which determines the picture quality.

11. Device according to Claim 10, characterized in that the reference-signal measuring device (13) acquires the difference between a white and a black reference level, related to the black reference level, and in that the signal processing device (11) delivers a gain adjustment signal to an amplifier (7) in the luminance signal channel to the decoder.

12. Device according to Claim 10, characterized in that the reference-signal measuring device (13) acquires the demodulated helper reference burst and a helper setup level, related to the latter level, and in that a µ-controller (11) delivers, from the level values, adjustment values for the digitized colour video signals applied to the further, digital, decoder (4).

13. Device according to Claim 12, characterized in that the reference-signal measuring device (13) acquires a noise signal level on a black level reference signal transmitted in a set line of the colour video signal, and in that the intermediately stored adjustment values are processed by the signal processing device (11) in such a way that the contribution of the helper signal in the further decoding is reduced or suspended if the noise signal component exceeds a specific level value.

14. Device according to Claim 10, characterized in that the reference-signal measuring device (13) acquires the demodulated helper reference burst, and in that, by the signal processing device (11), the contribution of the helper signal is suspended if the level of the helper reference burst is above a specific threshold value.

15. Device according to one of Claims 9 to 12, characterized in that the decoder (2) is a PAL decoder and the further decoder (4) is a PALplus decoder.
